(19) Europäisches Patentamt
European Patent Office
Office européen des brevets

(11) **EP 4 642 090 A1**

(12) **EUROPEAN PATENT APPLICATION**
published in accordance with Art. 153(4) EPC

(43) Date of publication:
**29.10.2025 Bulletin 2025/44**

(21) Application number: **24813941.2**

(22) Date of filing: **16.04.2024**

(51) International Patent Classification (IPC):
***H04W 28/06*** (2009.01)

(52) Cooperative Patent Classification (CPC):
**H04L 1/1607; H04W 28/06**

(86) International application number:
**PCT/CN2024/088018**

(87) International publication number:
**WO 2024/244735 (05.12.2024 Gazette 2024/49)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **26.05.2023 CN 202310615610**

(71) Applicant: **ZTE Corporation
Shenzhen, Guangdong 518057 (CN)**

(72) Inventors:
• **BIAN, Luanjian
Shenzhen, Guangdong 518057 (CN)**

• **DAI, Bo
Shenzhen, Guangdong 518057 (CN)**
• **CHEN, Mengzhu
Shenzhen, Guangdong 518057 (CN)**
• **HU, Youjun
Shenzhen, Guangdong 518057 (CN)**
• **LIU, Kun
Shenzhen, Guangdong 518057 (CN)**
• **YANG, Weiwei
Shenzhen, Guangdong 518057 (CN)**

(74) Representative: **Ziebig Hengelhaupt Intellectual
Property Attorneys
Patentanwaltskanzlei PartGmbB
Leipziger Straße 49
10117 Berlin (DE)**

(54) **SIGNAL TRANSMISSION METHOD, AND COMMUNICATION APPARATUS AND COMPUTER-READABLE STORAGE MEDIUM**

(57) Provided are a signal transmission method and apparatus, and a computer-readable storage medium. The signal transmission method comprises: determining a preamble sequence and a transmission resource; sending a frame structure signal by means of the transmission resource, wherein the frame structure signal comprises the preamble sequence and a data block, and the preamble sequence is located before the data block; detecting the preamble sequence; and when the preamble sequence in the frame structure signal is detected, acquiring a data frame structure signal of the data block in the frame structure signal on the basis of the transmission resource.

A first node determines a preamble sequence and a transmission resource — S201

The first node sends a frame structure signal by means of the transmission resource — S202

FIG. 2

## Description

The present disclosure claims a priority to Chinese patent application 202310615610.1, filed on May 26, 2023, the entire content of which is incorporated in this application by reference.

TECHNICAL FIELD

The present disclosure relates to the field of communication technologies, and in particular, to a signal transmission method, a communication apparatus, and a computer-readable storage medium.

BACKGROUND

In a communication technology of passive Internet of Things, a receiver generally detects a preamble sequence to acquire valid information transmitted from a transmitter. The preamble sequence is a signal segment before a valid signal, and may be used for time domain synchronization of the valid signal to determine a starting time of the valid signal.

SUMMARY

In an aspect, embodiments of the present disclosure provide a signal transmission method. The signal transmission method includes: determining a preamble sequence and a transmission resource; and transmitting a frame structure signal through the transmission resource, where the frame structure signal includes the preamble sequence and a data block, and the preamble sequence is located before the data block.

In another aspect, the embodiments of the present disclosure provide a signal transmission apparatus. The signal transmission apparatus includes: a determining module and a transmitting module. The determining module is configured to determine a preamble sequence and a transmission resource; and the transmitting module is configured to transmit a frame structure signal through the transmission resource, where the frame structure signal includes the preamble sequence and a data block, and the preamble sequence is located before the data block.

In some embodiments, the frame structure signal further includes an auxiliary sequence.

In some embodiments, the data block includes N pieces of data, where the N is an integer greater than 1; in the frame structure signal, there is an auxiliary sequence after every n pieces of the data and there is no auxiliary sequence at a tail of the data block, where n is an integer less than N.

In some embodiments, a number of auxiliary sequences in the data block is $\left\lceil \frac{N}{n} \right\rceil$ -1.

In some embodiments, the preamble sequence is the same as the auxiliary sequence; or, the auxiliary sequence corresponds to a sequence in a preset set of sequences cyclically and sequentially in a time domain; or, the preamble sequence and the auxiliary sequence correspond to sequences in a preset set of sequences cyclically and sequentially in a time domain.

In some embodiments, a length of the auxiliary sequence is less than a length of the preamble sequence.

In some embodiments, in the frame structure signal, the preamble sequence is modulated by amplitude shift keying, and data in the data block is modulated by phase shift keying.

In some embodiments, the frame structure signal further includes a terminator; and the terminator is located after the data block.

In some embodiments, the frame structure signal further includes a delimiter, and the delimiter is located after the preamble sequence and before the data block; and the delimiter is a signal with a fixed form.

In some embodiments, the preamble sequence belongs to a set of preamble sequences, and the transmission resource belongs to a set of transmission resources; each preamble sequence in the set of preamble sequences is in one-to-one correspondence with each subset of transmission resources in the set of transmission resources.

In some embodiments, the set of transmission resources is determined according to a transmission resource configuration parameter transmitted by a second node.

In some embodiments, determining the preamble sequence and the transmission resource further includes: determining the preamble sequence from the set of preamble sequences, and determining a subset of transmission resources corresponding to the preamble sequence from the set of transmission resources and determining the transmission resource from the subset of transmission resources; or, determining the transmission resource from the set of transmission resources, and determining a subset of transmission resources to which the transmission resource belongs, and then determining the preamble sequence corresponding to the subset of transmission resources from the set of preamble sequences.

In some embodiments, the transmission resource includes at least one of: an extending sequence, a time domain resource, or a frequency domain resource.

In some embodiments, in a case where the transmission resource is the extending sequence, data in the data block is data that has been extended by the extending sequence.

In some embodiments, the time domain resource is a slot; a set of slots includes F slots and P subsets of slots, where F and P are positive integers; and in a case where a value of F/P is an integer, a subset of slots with a serial number f in the P subsets of slots includes slots $f \cdot \frac{F}{P}$ to $(f+1) \cdot \frac{F}{P} - 1$ , where $0 \leq f \leq P\text{-}1$.

In some embodiments, the time domain resource is a slot; a set of slots includes F slots and P subsets of slots, where F and P are positive integers; in a case where a value of F/P is not an integer, the P subsets of slots include: a subset of slots with a serial number 0 including slots 0 to $\left\lfloor\frac{F}{P}\right\rfloor + \mathrm{mod}(F,P) - 1$, and a subset of slots with a serial number f including slots

$$f \cdot \left\lfloor\frac{F}{P}\right\rfloor + \mathrm{mod}(F,P) \qquad \text{to}$$

$$(f+1)\cdot\left\lfloor\frac{F}{P}\right\rfloor + \mathrm{mod}(F,P) - 1 , \text{ where } 1 \leq f \leq P\text{-}1;$$

or, a subset of slots with a serial number f including slots $f\cdot\left\lfloor\frac{F}{P}\right\rfloor$ to $(f+1)\cdot\left\lfloor\frac{F}{P}\right\rfloor - 1$, where 0≤f≤P-2, and a last subset of slots including slots $(P-1)\cdot\left\lfloor\frac{F}{P}\right\rfloor$ to F-1 .

In some embodiments, the above apparatus further includes a receiving module. The receiving module is configured to: receive a retransmission indication, where the retransmission indication includes indication information for the preamble sequence; and the indication information is used to indicate D preamble sequences, and D is a positive integer. The determining module is configured to: determine an extending sequence from a set of extending sequences; and use a preamble sequence used for transmitting the data block last time as a preamble sequence used for retransmitting the data block, or, use a first preamble sequence of the D preamble sequences as a preamble sequence used for retransmitting the data block.

In yet another aspect, the embodiments of the present disclosure provide a signal transmission apparatus. The signal transmission apparatus includes: a detecting module and an acquiring module. The detecting module is configured to detect a preamble sequence; and the acquiring module is configured to acquire a data frame structure signal of a data block in a frame structure signal based on a transmission resource in a case where the preamble sequence in the frame structure signal has been detected.

In some embodiments, the preamble sequence belongs to a set of preamble sequences, the transmission resource belongs to a set of transmission resources; and each preamble sequence in the set of preamble sequences is in one-to-one correspondence with each subset of transmission resources in the set of transmission resources.

In some embodiments, the above apparatus further includes a transmitting module. The transmitting module is configured to transmit a transmission resource configuration parameter to a first node; where the transmission resource configuration parameter is used to indicate the first node to determine the set of transmission resources.

In some embodiments, the transmission resource includes at least one of: an extending sequence, a time domain resource, or a frequency domain resource.

In some embodiments, in a case where the transmission resource is an extending sequence, the detecting module is configured to detect each preamble sequence in the set of preamble sequences; and the acquiring module is configured to determine a subset of extending sequences corresponding to the preamble sequence that has been detected, and de-extend the data in the data block based on the subset of extending sequences.

In some embodiments, the detecting module is configured to: detect the preamble sequence corresponding to a subset of time domain resources, in the subset of time domain resources, in a case where the transmission resource is a time domain resource.

In some embodiments, the time domain resource is a slot; a set of slots includes F slots and P subsets of slots, where F and P are positive integers; and in a case where a value of F/P is an integer, a subset of slots with a serial number f in the P subsets of slots includes slots $f\cdot\frac{F}{P}$ to $(f+1)\cdot\frac{F}{P} - 1$, where 0≤f≤P-1.

In some embodiments, the time domain resource is a slot; a set of slots includes F slots and P subsets of slots, where F and P are positive integers; and in a case where a value of F/P is not an integer, the P subsets of slots include: a subset of slots with a serial number 0 including slots 0 to $\left\lfloor\frac{F}{P}\right\rfloor + \mathrm{mod}(F,P) - 1$, and a subset of slots with a serial number f including slots

$$f\cdot\left\lfloor\frac{F}{P}\right\rfloor + \mathrm{mod}(F,P) \qquad \text{to}$$

$$(f+1)\cdot\left\lfloor\frac{F}{P}\right\rfloor + \mathrm{mod}(F,P) - 1 , \text{ where } 1 \leq f \leq P\text{-}1;$$

or, a subset of slots with a serial number f including slots $f\cdot\left\lfloor\frac{F}{P}\right\rfloor$ to $(f+1)\cdot\left\lfloor\frac{F}{P}\right\rfloor - 1$, where 0≤f≤P-2, and a last subset of slots including slots $(P-1)\cdot\left\lfloor\frac{F}{P}\right\rfloor$ to F-1.

In some embodiments, in a case where the transmission resource is a frequency domain resource, the detecting module is configured to: detect the preamble sequence corresponding to a subset of frequency domain resources, on the subset of frequency domain resources.

In some embodiments, the transmitting module is further configured to transmit a retransmission indication, where the retransmission indication includes indication information for the preamble sequence, the indication information is used to indicate D preamble sequences, and D is a positive integer.

In some embodiments, the detecting module is further configured to: detect the D preamble sequences, or detect a first preamble sequence of the D preamble sequences, in a case where the transmission resource is an extending sequence.

In some embodiments, the above apparatus further includes: a processing module. The processing module is configured to: de-extend the data in the data block based on a set of extending sequences in a case where the preamble sequence has been detected.

In yet another aspect, the embodiments of the present disclosure provide a communication apparatus. The communication apparatus includes: a processor and a memory; the processor is coupled with the memory; the memory is configured to store a computer program; and the processor, when executing the computer program, implements the signal transmission method described in any one of the above embodiments.

In yet another aspect, the embodiments of the present disclosure provide a computer-readable storage medium. The computer-readable storage medium has stored computer program instructions, and the computer program instructions, when executed by a processor, implement the signal transmission method described in any one of the above embodiments.

In yet another aspect, the embodiments of the present disclosure provide a computer program product. The computer program product includes computer program instructions, and the computer program instructions, when executed by a processor, implement the signal transmission method described in any one of the above embodiments.

## BRIEF DESCRIPTION OF THE DRAWINGS

In order to explain the technical solutions in the present disclosure more clearly, the drawings that need to be used in some embodiments of the present disclosure will be introduced below briefly. It is obvious that the drawings in the following description are only drawings for some embodiments of the present disclosure, and for those ordinary skilled in the art, other drawings may also be obtained according to these drawings.

FIG. 1 is a schematic diagram of a communication network architecture according to some embodiments.
FIG. 2 is a schematic flowchart of a signal transmission method according to some embodiments.
FIG. 3 is a schematic diagram of a frame structure signal according to some embodiments.
FIG. 4 is a schematic diagram of another frame structure signal according to some embodiments.
FIG. 5 is a schematic diagram of yet another frame structure signal according to some embodiments.
FIG. 6 is a schematic flowchart of another signal transmission method according to some embodiments.
FIG. 7 is a schematic flowchart of yet another signal transmission method according to some embodiments.

FIG. 8 is a schematic flowchart of yet another signal transmission method according to some embodiments.
FIG. 9 is a structural schematic diagram of a signal transmission apparatus according to some embodiments.
FIG. 10 is a structural schematic diagram of another signal transmission apparatus according to some embodiments.
FIG. 11 is a structural schematic diagram of a communication apparatus according to some embodiments.

## DETAILED DESCRIPTION

The technical solutions in the present disclosure will be described clearly and completely below in conjunction with the drawings in the present disclosure. It is obvious that the described embodiments are only a part of the embodiments of the present disclosure, but not all of the embodiments. Based on the embodiments in the present disclosure, all other embodiments obtained by those ordinary skilled in the art without creative efforts shall fall within the protection scope of the present disclosure.

It should be noted that in the present disclosure, the expression "for example" or "exemplarily", etc., is used to represent an example, an illustration or an explanation. Any embodiment or design scheme described with "exemplarily" or "for example", etc., in the present disclosure should not be interpreted as more preferred or advantageous than other embodiments or design schemes. Specifically, the use of the expression such as "exemplarily" or "for example", etc., is intended to present related concepts in detail.

Hereinafter, the terms "first" and "second", are used for descriptive purposes only, but cannot be understood as indicating or implying relative importance or implicitly specifying the number of the indicated technical features. Thus, features defined with "first" or "second", etc., may explicitly or implicitly include one or more of the features.

In the description of the present disclosure, unless otherwise stated, the character "/" means "or", and for example, A/B may represent A or B. "And/or" herein only an associated relationship for describing associated objects, representing that there may be three relationships, and for example, A and/or B may represent: only A, only B, and A and B. In addition, "at least one" refers to one or more, and "multiple / plurality of" refers to two or more than two.

In the communication technology of the passive Internet of Things, time division multiplexing is generally used for transmitting information between a network node (e.g., a base station) and a terminal device. Time division multiplexing refers to using different time periods of a same physical connection to transmit different signals, so as to achieve the purpose of multiplexing transmission. For example, when the base station identifies terminal devices within the base station's own coverage area, a plurality of terminal devices need to transmit uplink information in different slots corresponding to the plurality of terminal devices respectively, so as to avoid interference between a plurality of signals.

However, due to the limited number of slots, in a case of a large number of terminals, different terminal devices may have selected a same slot to transmit signals, thereby resulting in an increased probability of signal collision and then resulting in a decrease in transmission efficiency of signals.

Therefore, currently, code division multiplexing is used in passive Internet of Things communication to improve network performance, and signals transmitted from respective terminal devices are distinguished by using different sequences, so that these terminal devices may transmit uplink information in parallel in a same slot to avoid signal collision, so as to improve transmission efficiency of information, and improve network capacity.

However, since the base station manages the plurality of terminal devices simultaneously and different preamble sequences may be used among different terminal devices, the base station needs to detect all preamble sequences when detecting a signal of a terminal, thereby resulting in a relatively complex process of signal detection by the base station. In addition, in a case of a large number of terminal devices, due to a limited number of transmission resources, different terminal devices may use a same transmission resource, thereby causing interference and collision between signals.

Based on this, the embodiments of the present disclosure provide a signal transmission method, and in the method, a terminal transmits a frame structure signal through a transmission resource, that is, a preamble sequence in the frame structure signal is associated with the transmission resource, and therefore, when detecting the frame structure signal transmitted from the terminal, a base station only needs to detect, on a transmission resource, a preamble sequence corresponding to the transmission resource, without attempting to detect all preamble sequences, which may effectively reduce the complexity of signal detection by the base station and reduce the probability of signal collision.

The technical solution provided in the embodiments of the present disclosure may be applied to various communication systems, e.g., New Radio (NR) communication systems using a 5G communication technology, future evolution systems, or multi-communication fusion systems, etc.

The signal transmission method provided in the embodiments of the present disclosure may be applied to a first node and a second node. In the embodiments of the present disclosure, it is taken as an example for the explanation that the first node is a terminal device and the second node is a base station.

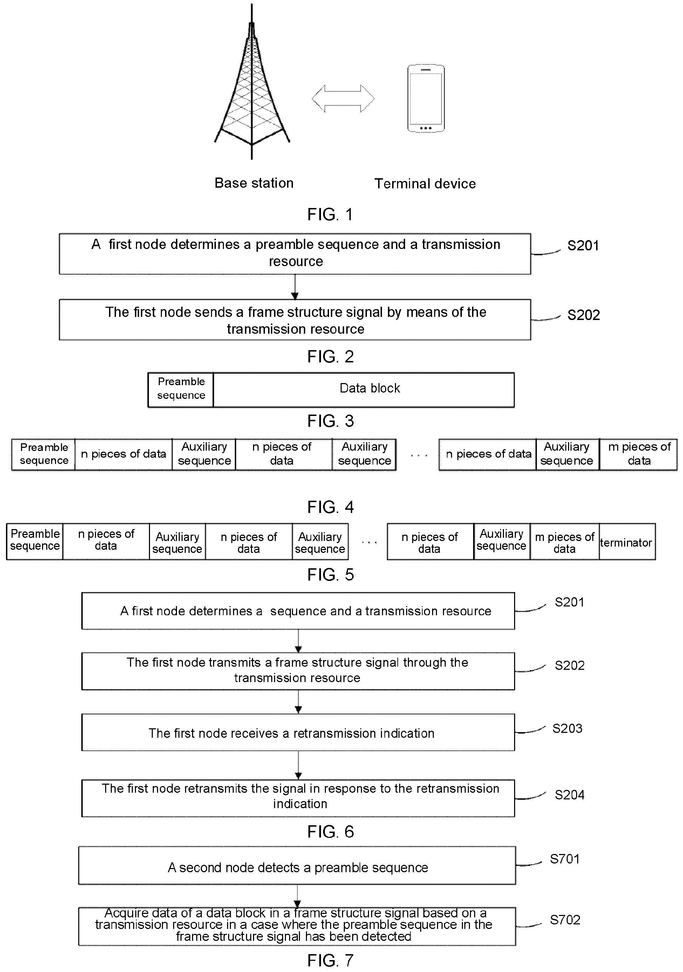

Exemplarily, FIG. 1 is a schematic diagram of an architecture of a communication system according to some embodiments. As shown in FIG. 1, the communication system includes a base station and a terminal device. The base station may be connected with the terminal device through a wired network or a wireless network. The wired network or the wireless network may include a router, a switcher, or other devices for facilitating communication between the base station and the terminal device, which is not limited in the embodiments of the present disclosure.

In some embodiments, the base station is used to provide a wireless access service for the terminal device. For example, a base station provides a service coverage area (which may also be referred to as a cell). A terminal device entering the area may communicate with the base station by a wireless signal, so as to receive a radio access service provided by the base station. In addition, the service coverage area by the base station may also be classified into a near-field and a far-field; and the terminal device may be located in a range of the near-field or the terminal device may be also located in a range of the far-field.

In some embodiments, the base station may be an evolution base station (evolution nodeB, eNB), a next generation base station (generation nodeB, gNB), a reception and transmission point (transmission receive point, TRP), a transmission point (TP), or a certain type of other access nodes. According to a size of the provided service coverage area, the base station may also be classified into a macro base station for providing a macro cell, a pico base station for providing a pico cell, and a femto base station for providing a femto cell. With the continuous evolution of wireless communication technologies, other names may be used for future base stations.

In some embodiments, the terminal device may be a device with a wireless transmission and reception capability (e.g., a mobile phone, a tablet computer, a wearable device, an in-vehicle device, an augmented reality (AR)/virtual reality (VR) device, a notebook computer, an ultra-mobile personal computer (UMPC), a netbook, a personal digital assistant (PDA), etc.). The embodiments of the present disclosure do not limit the type of the terminal device.

It should be understood that FIG. 1 is an exemplary structural diagram, and the number of devices included in the communication system shown in FIG. 1 is not limited thereto, and for example, the number of base stations is not limited and the number of terminal devices is not limited thereto. Moreover, in addition to the devices shown in FIG. 1, the communication system shown in FIG. 1 may further include other devices, which are not limited thereto.

FIG. 2 is a schematic flowchart of a signal transmission method according to some embodiments. Exemplarily, the signal transmission method provided in the present disclosure may be applied to the communication system shown in FIG. 1. In the embodiments of the present disclosure, it is taken as an example for the explanation that the first node is an executing body.

As shown in FIG. 2, the signal transmission method provided in the present disclosure, for example, may include the following contents.

In S201, a first node determines a preamble sequence and a transmission resource.

The preamble sequence may be used in a process of signal synchronization or information indication. It should be understood that with the development of technologies and the change of names in the standards, the preamble sequence may also have other names, which are not limited in the embodiments of the present disclosure, and sequences used for the signal synchronization or the information indication in the communication field each may be considered as the preamble sequence in the present disclosure. The transmission resource may be a resource, such as, a frequency domain resource, a time domain resource, or an extending sequence, etc. A set composed of multiple preamble sequences is a set of preamble sequences in the embodiments of the present disclosure, and multiple transmission resources may compose multiple subsets of transmission resources, and a set composed of the multiple subsets of transmission resources is a set of transmission resources in the embodiments of the present disclosure.

In some embodiments, when a signal needs to be transmitted, the first node may determine a preamble sequence and a transmission resource, to transmit the signal based on the preamble sequence and the transmission resource.

In some embodiments, the preamble sequence belongs to a set of preamble sequences, and the transmission resource belongs to a set of transmission resources; each preamble sequence in the set of preamble sequences is in one-to-one correspondence with each subset of transmission resources in the set of transmission resources.

In some embodiments, the set of transmission resources may be determined according to a transmission resource configuration parameter transmitted from a second node, or the set of transmission resources may be a predefined set.

In some embodiments, the above S201, for example, may be implemented as the following two implementations.

In an implementation, the preamble sequence is determined from the above-mentioned set of preamble sequences; and the subset of transmission resources corresponding to the preamble sequence is determined from the set of transmission resources, and the transmission resource is determined from the subset of transmission resources. Exemplarily, the first node may determine a preamble sequence in the set of preamble sequences according to preamble sequence indication field information transmitted from other devices (e.g., the second node), where the preamble sequence indication field information is used to indicate a preamble sequence. Or, the first node may randomly select a preamble sequence from the set of preamble sequences.

In another implementation, the transmission resource is determined from the set of transmission resources, and the subset of transmission resources to which the transmission resource belongs is determined, and then, the preamble sequence corresponding to the subset of transmission resources is determined from the set of preamble sequences. Exemplarily, the first node may randomly select a transmission resource from the set of transmission resources.

In S202, the first node transmits a frame structure signal through the transmission resource.

The frame structure signal includes the preamble sequence and a data block, where the preamble sequence is located before the data block.

In some embodiments, in the frame structure signal, the preamble sequence is modulated by amplitude shift keying, and data in the data block is modulated by phase shift keying. The amplitude shift keying is a digital modulation scheme that conveys information by means of an amplitude of a carrier varying with a digital baseband signal. The phase shift keying is a digital modulation scheme that conveys information by means of a phase of a carrier varying with a digital baseband signal.

In some embodiments, the preamble sequence determined in S201 is before the data block, and the preamble sequence may be used for synchronization of the frame structure signal. For example, FIG. 3 is a schematic diagram of a form of a frame structure signal according to some embodiments. As shown in FIG. 3, in a frame structure of the frame structure signal, the preamble sequence is before the data block, in a time domain.

In some embodiments, the data block includes N pieces of data, where the N is an integer greater than 1; in the data block, there is an auxiliary sequence after every n pieces of the data and there is no auxiliary sequence at a tail of the data block, where n is an integer less than N. The auxiliary sequence may be used for auxiliary synchronization, auxiliary decoding, or channel estimation, etc., for a signal. Similarly, with the change of future standards, the auxiliary sequence may also have other names, and in the communication field, a sequence used for auxiliary synchronization, auxiliary decoding, or channel estimation may be considered as the auxiliary sequence in the present disclosure. As an example, the above-mentioned n=A×C, where A is a positive integer, and C is a length of an extending sequence.

In some embodiments, the number of auxiliary sequences in the data block is $\left\lceil \frac{N}{n} \right\rceil$ -1. $\lceil \rceil$ is an operator of rounding up. For example, a data block includes 10 pieces of data and there is an auxiliary sequence after every 3 pieces of data, and then the data block includes 3 auxiliary sequences.

For example, FIG. 4 is a schematic diagram of another frame structure signal according to some embodiments. As shown in FIG. 4, the frame structure signal further includes an auxiliary sequence. In a time domain, there is an auxiliary sequence after every n pieces of data in the data block. After last m (m is a remainder of N divided by n) pieces of data, that is, at a tail of the data block, there is no auxiliary sequence, where m is an integer greater than 1 and less than or equal to n.

**In** some embodiments, the preamble sequence is the same as the auxiliary sequence; or, the auxiliary sequence corresponds to a sequence in a preset set of sequences cyclically and sequentially in a time domain; or, the preamble sequence and the auxiliary sequence correspond to sequences in a preset set of sequences cyclically and sequentially in a time domain.

Exemplarily, for the auxiliary sequence to correspond to a sequence in a preset set of sequences cyclically and sequentially in a time domain, in a data frame, a t-th auxiliary sequence is a sequence with a serial number of mod(k+t-1, K) in the preset set of sequences, where k is a serial number of a sequence used by a first auxiliary sequence, k is greater than or equal to 0, K is the number of sequences contained in the preset set of sequences, and t is greater than or equal to 1. For example, the preset set of sequences includes three sequences: a sequence A, a sequence B, and a sequence C, respectively. In the data frame, the first auxiliary sequence uses the sequence A, a second auxiliary sequence uses the sequence B, a third auxiliary sequence uses the sequence C, and a fourth auxiliary sequence uses the sequence A again, and so on.

In another example, for the preamble sequence and the auxiliary sequence to correspond to sequences in a preset set of sequences cyclically and sequentially in a time domain, the preamble sequence and the auxiliary sequence may be collectively referred to as additional sequences. In a data frame, a t-th additional sequence is a sequence with a serial number of mod (k+t-1, K) in the preset set of sequences, where k is a serial number of a sequence used by a first additional sequence (i.e., the preamble sequence), k is greater than or equal to 0, K is the number of sequences contained in the preset set of sequences, and t is greater than or equal to 1. For example, the preset set of sequences includes three sequences: a sequence A, a sequence B, and a sequence C, respectively. In the data frame, the first additional sequence (i.e., the preamble sequence) uses the sequence A, a second additional sequence (i.e., a first auxiliary sequence) uses the sequence B, a third additional sequence (i.e., a second auxiliary sequence) uses the sequence C, and a fourth additional sequence (i.e., a third auxiliary sequence) uses the sequence A again, and so on.

In some embodiments, a length of the auxiliary sequence is smaller than a length of the preamble sequence. Exemplarily, sequences used by the auxiliary sequence and the preamble sequence may be selected from the preset set of sequences cyclically. Therefore, after determining a sequence used for the auxiliary sequence from the preset set of sequences, the sequence may be segmented to ensure that the length of the auxiliary sequence is smaller than the length of the preamble sequence.

In some embodiments, the frame structure signal further includes a terminator, where the terminator is located after the data block. As an example, the terminator may also be a preset sequence segment. For example, FIG. 5 is a schematic diagram of yet another frame structure signal according to some embodiments. As shown in FIG. 5, the frame structure signal further includes a terminator. In the time domain, the terminator is located at the tail of the data block and is used to indicate an ending position of the frame structure signal.

In some embodiments, the frame structure signal further includes a delimiter, where the delimiter is located after the preamble sequence and before the data block. The delimiter is a signal with a fixed form, and a duration of the delimiter is less than a duration of the preamble sequence, and for example, the duration of the delimiter is equal to a duration of one data symbol or two data symbols. The delimiter may be used to reserve detection time for the preamble sequence, that is, transmission time for the delimiter may be used as the detection time for the preamble sequence.

In some embodiments, the above-mentioned transmission resource may include at least one of: an extending sequence, a time domain resource, or a frequency domain resource.

In some embodiments, in a case where the transmission resource is the extending sequence, the data in the data block is data that has been extended by the extending sequence.

In some embodiments, in a case where the transmission resource is the time domain resource, the above S202, for example, may be implemented as: transmitting the frame structure signal in the time domain resource, for example, transmitting the frame structure signal in a slot, where the slot is a count value or corresponds to a time domain resource unit.

In some embodiments, it is taken as an example that the time domain resource is a slot, a set of slots included in the first node includes F slots: slots 0 to F-1, respectively, and P subsets of slots (i.e., a total number of slots in the P subsets of slots is F), where F and P are positive integers. In a case where a value of F/P is an integer, a subset of slots with a serial number f in the P subsets of slots includes slots $f \cdot \dfrac{F}{P}$ to

$(f+1) \cdot \dfrac{F}{P} - 1$, where $0 \leq f \leq P\text{-}1$.

In some embodiments, it is taken as an example that the time domain resource is a slot, a set of slots included in the first node includes F slots and P subsets of slots, where F and P are positive integers. In a case where a value of F/P is not an integer, the P subset of slots includes:

a subset of slots with a serial number 0 including slots 0 to $\left\lfloor \dfrac{F}{P} \right\rfloor + \mathrm{mod}(F,P) - 1$, and a subset of slots with a serial number f including slots

$$f \cdot \left\lfloor \frac{F}{P} \right\rfloor + \mathrm{mod}(F,P) \quad \text{to}$$

$$(f+1) \cdot \left\lfloor \frac{F}{P} \right\rfloor + \mathrm{mod}(F,P) - 1 \quad, \text{ where}$$

$1 \leq f \leq P\text{-}1$, and in the above formula, $\lfloor \rfloor$ is an operator of rounding down, and P is greater than 2, or,
a subset of slots with a serial number f including slots

$$f \cdot \left\lfloor \frac{F}{P} \right\rfloor \text{ to } (f+1) \cdot \left\lfloor \frac{F}{P} \right\rfloor - 1, \text{ where } 0 \leq f \leq P\text{-}2,$$

and a last subset of slots including slots

$$(P-1) \cdot \left\lfloor \frac{F}{P} \right\rfloor \text{ to F-1, where P is greater than 2.}$$

In some embodiments, in a case where the transmission resource is the frequency domain resource, the above S202, for example, may be implemented as: transmitting the frame structure signal in the frequency domain resource. The frequency domain resource may be a transmission subband, a transmission channel, a physical resource block, or a subcarrier, etc.

In some scenarios, the signal collision may result in that the second node does not decode the data successfully. Therefore, the second node will indicate the first node to retransmit a signal, i.e., retransmit the data. Therefore, in some embodiments, as shown in FIG. 6, the signal transmission method provided in the embodiments of the present disclosure further includes S203 to S204.

In S203, the first node receives a retransmission indication.

In some embodiments, the retransmission indication is used to inform the first node to retransmit a frame structure signal containing the data block. If the first node does not transmit the above-mentioned data block successfully and has received a retransmission instruction, it re-determines a preamble sequence and a transmission resource, and transmits a frame structure signal containing the data block.

In some embodiments, the above-mentioned retransmission indication includes indication information for the preamble sequence or indication information for the extending sequence. The indication information is used to indicate D preamble sequences or D extending sequences, where D is a positive integer.

In S204, in response to the retransmission indication, retransmit a signal.

In some embodiments, the preamble sequence used by the first node to transmit the data block last time is the same as a preamble sequence in the retransmission indication, and then a frame structure signal containing the above-mentioned data block is retransmitted; or, the extending sequence used by the first node to transmit the data block last time is the same as an extending sequence in the retransmission indication, and then a frame structure signal containing the data block is retransmitted.

Retransmitting the frame structure signal containing the data block, includes: determining a preamble sequence and a transmission resource, and transmitting a frame structure signal based on the preamble sequence and the transmission resource that have been determined.

In some embodiments, in a case where the transmission resource is the extending sequence, the first node determines an extending sequence in a set of extending sequences, and uses a preamble sequence used for transmitting the data block last time as a preamble sequence used for retransmitting the data block. Or, a first preamble sequence of the D preamble sequences may be used as a preamble sequence used for retransmitting the data block. The frame structure signal containing the data block is retransmitted based on the extending sequence and the preamble sequence.

In some embodiments, in a case where the transmission resource is a slot, the first node determines a slot from remaining slots of a set of slots, determines a subset of slots in which the slot is located, and determines a corresponding preamble sequence according to the subset of slots. The frame structure signal containing the data block is retransmitted based on the slot and the preamble sequence.

In some embodiments, in a case where the transmission resource is the frequency domain resource, the first node determines a frequency domain resource from a set of frequency domain resources, determines a subset of frequency domain resources in which the frequency domain resource is located, and determines a corresponding preamble sequence according to the subset of frequency domain resources. The frame structure signal containing the data block is retransmitted based on the frequency domain resource and the preamble sequence.

It can be understood that in the process of the retransmission of the signal, the first node selects a transmission resource from a set of transmission resources instead of selecting a transmission resource from a subset of transmission resources, so that a probability that multiple first nodes have selected a same transmission resource is decreased, and then a probability of signal collision is decreased and the resource transmission efficiency is improved.

In some embodiments, the second node may further indicate a set of transmission resources for retransmitting the data block, to the first node. The first node determines a transmission resource from the set of transmission resources and retransmits a frame structure signal containing the data block based on the determined transmission resource.

In some embodiments, if the first node does not transmit the data to the second node successfully, but has received a retransmission instruction for requesting a retransmission of the data, from the second node, the first node may re-determine a preamble sequence and a transmission resource and transmit the data.

In some embodiments, the second node, in a case of decoding the acquired data successfully, transmits acknowledgment information to the first node, where the acknowledgment information indicates that the data transmitted from the second node has been decoded successfully. Therefore, in a case where the first node has received the retransmission instruction and the acknowledgment information, the first node determines that the retransmission instruction is invalid.

FIG. 7 is a schematic flowchart of a signal transmission method according to some embodiments. Exemplarily, the signal transmission method provided in the present disclosure may be applied to the communication system shown in FIG. 1. In the embodiments of the present disclosure, it is taken as an example for the explanation that the second node is an executing body.

As shown in FIG. 7, the signal transmission method provided in the present disclosure may include the following contents.

In S701, detect a preamble sequence.

In S702, acquire data of a data block in a frame structure signal based on a transmission resource in a case where the preamble sequence in the frame structure signal has been detected.

In some embodiments, the signal transmission method described in the above S701 to S702 may be applied to the second node, and the preamble sequence belongs to a set of preamble sequences and the transmission resource belongs to a set of transmission resources; each preamble sequence in the set of preamble sequences is in one-to-one correspondence with each subset of transmission resources in the set of transmission resources.

In some embodiments, the signal transmission method provided in the present disclosure further includes: transmitting a transmission resource configuration parameter to a first node, where the transmission resource configuration parameter is used to indicate the first node to determine a set of transmission resources.

In some embodiments, the transmission resource includes at least one of: an extending sequence, a time domain resource, or a frequency domain resource.

In some embodiments, in a case where the transmission resource is the extending sequence, detecting the preamble sequence in the above S701 may be implemented as: detecting, by the second node, each preamble sequence in the set of preamble sequences. Acquiring the data of the data block in the frame structure signal based on the transmission resource in the above S702 may be implemented as: a, determining, by the second node, a subset of extending sequences corresponding to the detected preamble sequence; and b, de-extending, by the second node, the data of the data block based on the subset of extending sequences.

In some embodiments, in a case where the transmission resource is the time domain resource, detecting the preamble sequence in the above S701 may be implemented as: detecting a preamble sequence corresponding to a subset of time domain resources, on the subset of time domain resources. The detailed content for the set of time domain resources may refer to the above embodiments, which will not be repeated here.

In some embodiments, in a case where the transmission resource is the frequency domain resource, detecting the preamble sequence in the above S701 may be implemented as: detecting a preamble sequence corresponding to a subset of frequency domain resources, on the subset of frequency domain resources.

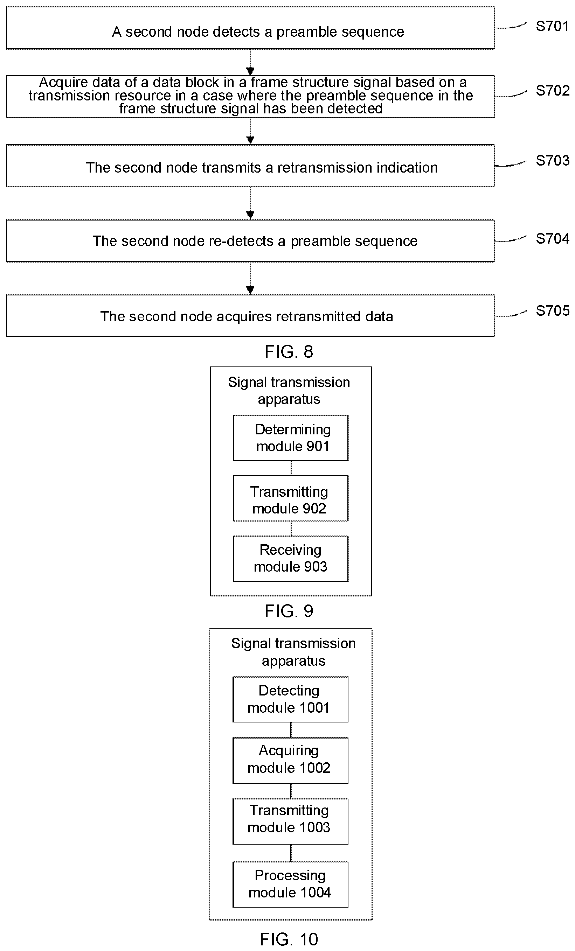

In some embodiments, as shown in FIG. 8, the signal transmission method provided in the embodiments of the present disclosure further includes S703 to S705.

In S703, the second node transmits a retransmission indication.

The retransmission indication includes indication information for a preamble sequence, where the indication information is used to indicate D preamble sequences, and D is a positive integer.

In S704, the second node re-detects a preamble sequence.

In some embodiments, in a case where the transmission resource is the extending sequence, the second node detects the D preamble sequences or detects a first preamble sequence of the D preamble sequences.

In some embodiments, in a case where the transmission resource is the time domain resource, the second node detects a preamble sequence corresponding to a subset of slots, in the subset of slots.

In some embodiments, in a case where the transmission resource is the frequency domain resource, a preamble sequence corresponding to a subset of frequency domain resources is detected on the subset of frequency domain resources.

In these embodiments, the second node does not acquire the data in the frame structure signal successfully (i.e., decoding data fails due to signal collision), and then, the second node transmits a retransmission indication to the first node, so as to indicate the first node to retransmit the data. In addition, the first node detects the preamble sequence, to prepare for acquiring the data retransmitted by the first node.

In S705, the second node acquires retransmitted data.

In this embodiment, in a case where a preamble sequence has been detected, the second node may decode the data block after the preamble sequence, to obtain the retransmitted data.

It can be understood that in a case where the transmission resource is the extending sequence, the second node may de-extend and decode the data block based on the set of extending sequences, to obtain the retransmitted data.

In the signal transmission method provided in the embodiments of the present disclosure, a terminal transmits a frame structure signal through a transmission resource in this method, that is, the preamble sequence in the frame structure signal is associated with the transmission resource, and the preamble sequence is used to indicate the subsequent data block. Therefore, a base station, when needing to acquire a data block, may acquire data through the preamble sequence. When the frame structure signal transmitted from the terminal is detected, only a preamble sequence corresponding to a transmission resource needs to be detected on the transmission resource, without attempting to detect all preamble sequences, which may reduce the complexity of signal detection by the base station effectively.

The above signal transmission method is explained below in detail for different types of transmission resources, in conjunction with detailed embodiments, and please refer to the following Embodiment 1 to Embodiment 3 for details. The Embodiment 1 corresponds to a case where the transmission resource is an extending sequence, the Embodiment 2 corresponds to a case where the transmission resource is a time domain resource, and the Embodiment 3 corresponds to a case where the transmission resource is a frequency domain resource.

Embodiment 1

In this embodiment, it is taken as an example for the explanation that the transmission resource is an extending sequence.

In the process of a new transmission of the signal, the first node performs the following contents.

In step 1, the first node determines a preamble sequence and an extending sequence corresponding to the preamble sequence.

In this embodiment, the first node determining the preamble sequence and the extending sequence, includes one of the following two modes.

Mode 1: the first node determines an extending sequence from a set of extending sequences. Exemplarily, the first node may determine an extending sequence according to extending sequence indication filed information transmitted from the second node, for example, the extending sequence indication filed information indicates an extending sequence; or the first node randomly selects an extending sequence from a set of extending sequences.

Further, the first node determines a subset of extending sequences in which the extending sequence is located, and then determines a corresponding preamble sequence according to the subset of extending sequences, to obtain a frame structure signal.

Mode 2: the first node determines a preamble sequence from a set of preamble sequences, for example, the first node may determine a preamble sequence in the set of preamble sequences according to the preamble sequence indication filed information transmitted from the second node, for example, the preamble sequence indication filed information indicates a preamble sequence. Or, the first node randomly selects a preamble sequence from a set of preamble sequences.

Further, the first node determines a subset of extending sequences corresponding to the preamble sequence, and then determines an extending sequence from the subset of extending sequences. Exemplarily, the first node may determine an extending sequence according to the extending sequence indication filed information transmitted from the second node, for example, the extending sequence indication filed information indicates an extending sequence; or randomly select an extending sequence from the subset of extending sequences.

In this embodiment, advantages of the method for determining the preamble sequence and the extending sequence is that: since each preamble sequence corresponds to a subset of extending sequences, the second node detects the frame structure signal transmitted from the first node, and after a preamble sequence has been detected, may determine a subset of extending sequences corresponding to the preamble sequence, and de-extends data based on the extending sequence in the subset of extending sequences, instead of de-extending the data based on all extending sequences in the set of extending sequences, that is, a range of de-extending of the extending sequence is reduced, thereby reducing the complexity of the signal detection by the second node (base station).

In this embodiment, the preamble sequence may be a predefined modulated signal or a predefined data sequence, e.g., an m-sequence with a length of 16. **In** a set of preamble sequences included in the first node, the set of preamble sequences contains P preamble sequences, where P is greater than or equal to 1.

In this embodiment, an extending sequence is a sequence containing C complex number elements, and the set of extending sequences contains Q extending sequences, where Q is greater than or equal to 1. For example, as shown in Table 1 below, the set of extending sequences contains 16 extending sequences, and each extending sequence is a sequence containing 4 complex number elements. For another example, as shown in Table 2 below, the set of extending sequences contains 16 extending sequences, and each extending sequence is a sequence containing 6 complex number elements. For yet another example, the set of extending sequences contains 64 extending sequences, and each extending sequence is a sequence containing 8 complex number elements.

Table 1

| Serial number | Extending sequence |
|---------------|-------------------|
| 0 | {1, 1, 1, 1} |
| 1 | {1, 1, -1, -1} |

(continued)

| Serial number | Extending sequence |
|---|---|
| 2 | {1, -1, 1, -1} |
| 3 | {1, -1, -1, 1} |
| 4 | {1, 1, j, -j} |
| 5 | {1, 1, -j, j} |
| 6 | {1, -1, j, j} |
| 7 | {1, -1, -j, -j} |
| 8 | {1, j, 1, -j} |
| 9 | {1, j, -1, j} |
| 10 | {1, -j, 1, j} |
| 11 | {1, -j, -1, -j} |
| 12 | {1, j, j, -1} |
| 13 | {1, j, -j, 1} |
| 14 | {1, -j, j, 1} |
| 15 | {1, -j, -j, -1} |

Table 2

| Serial number | Extending sequence |
|---|---|
| 0 | {1, 1, 1, 1, 1, 1} |
| 1 | {1, 1, 1, 1, -1, -1} |
| 2 | {1, 1, 1, -1, 1, -1} |
| 3 | {1, 1, 1, -1, -1, 1} |
| 4 | {1, 1, -1, 1, 1, -1} |
| 5 | {1, 1, -1, 1, -1, 1} |
| 6 | {1, 1, -1, -1, 1, 1} |
| 7 | {1, 1, -1, -1, -1, -1} |
| 8 | {1, -1, 1, 1, 1, -1} |
| 9 | {1, -1, 1, 1, -1, 1} |
| 10 | {1, -1, 1, -1, 1, 1} |
| 11 | {1, -1, 1, -1, -1, -1} |
| 12 | {1, -1, -1, 1, 1, 1} |
| 13 | {1, -1, -1, 1, -1, -1} |
| 14 | {1, -1, -1, -1, 1, -1} |
| 15 | {1, -1, -1, -1, -1, 1} |

In this embodiment, the set of extending sequences included in the first node may be a predefined set, or the first node may determine the set of extending sequences according to a transmission resource configuration parameter transmitted from the second node. As an example, the above-mentioned transmission resource configuration parameter is a length of an extending sequence (i.e., the number of elements contained in an extending sequence), and the first node may determine a corresponding set of extending sequences according to the length of the extending sequence and according to the preset number of extending sequences.

In this embodiment, the set of extending sequences contains P subsets, where P is greater than 1. There is a corresponding relationship between the preamble sequence and the subset of extending sequences. For example, each preamble sequence in the set of preamble sequences corresponds to a subset of extending sequences.

In an example, each subset of extending sequences contains Q/P extending sequences, and extending sequences contained in respective subsets of extending sequences are different among the respective subsets.

In step 2, transmit a frame structure signal based on the preamble sequence and the extending sequence determined in step 1. The frame structure signal includes the preamble sequence and a data block. The data block contains N pieces of data, where the N pieces of data are data that have been extended by the determined extending sequence.

In this embodiment, the data that has been extended by the extending sequence mentioned above includes: C pieces of extended data obtained by multiplying a piece of non-extended data by an extending sequence with a length of C (the extending sequence contains C elements). Furthermore, for s pieces of non-extended data, each piece of non-extended data is multiplied by an extending sequence with a length of C to obtain $s \times C$ pieces of extended data. For example, s pieces of non-extended data are a1, a2,..., as, and an extending sequence [c1, c2, c3, c4] with a length of 4 is used to extend the s pieces of non-extended data, to obtain the extended data $a1 \times [c1, c2, c3, c4]$, $a2 \times [c1, c2, c3, c4]$,..., $as \times [c1, c2, c3, c4]$.

In the process of a new transmission of the signal, the second node performs the following contents.

In this embodiment, the second node detects each preamble sequence in the set of preamble sequences, and in a case where a preamble sequence has been detected, determines a subset of extending sequences corresponding to the preamble sequence, and furthermore, de-extends data by using an extending sequence in the subset of extending sequences.

The process of determining the set of extending sequences in a case where the transmission resource is an extending sequence is explained below in detail.

In the process of determining the set of extending sequences, the second node performs the following contents.

The second node transmits an extending sequence configuration parameter to the first node, so as to indicate the first node to determine the set of extending sequences.

In this embodiment, the above-mentioned extending sequence configuration parameter is used to indicate a length of an extending sequence, i.e., the number of complex number elements contained in an extending sequence. Furthermore, a type of a length of extending sequences corresponds to one set of extending sequences. For example, the extending sequence configuration parameter indicates that the extending sequence has a length of 4, corresponding to a set of extending sequences with a length of 4. Or, the transmission resource configuration parameter indicates a set of extending sequences, where the set of extending sequences contains Q extending sequences, and Q is greater than or equal to 1.

In the process of determining the set of extending sequences, the first node performs the following contents.

In this embodiment, the first node determines the set of extending sequences according to the extending sequence configuration parameter. Exemplarily, the first node determines a length of the extending sequence according to the extending sequence configuration parameter, and then determines a corresponding set of extending sequences according to the length of the extending sequence. Or, a serial number of the set of extending sequences or a serial number of an extending sequence contained in the set of extending sequences is determined according to the extending sequence configuration parameter, and then the set of extending sequences is determined.

In the above process of a new transmission of the signal, if the first node transmits a frame structure signal to the second node, the frame structure signal carries target data. As an example, the target data contains a bit sequence with a length of 16 that is generated randomly. The bit sequence corresponds to the first node and the bit sequence may be used as a temporary identity identifier of the first node. The second node has detected the preamble sequence of the frame structure signal, but fails to acquire the target data in the frame structure signal (fails to decode the target data correctly), this case may be in that: multiple first nodes have selected a same extending sequence from a same subset of extending sequences, and the effect of code division multiplexing between different signals is not achieved, thereby resulting in collision between multiple signals. Or, multiple first nodes have selected a same slot on a frequency domain resource or have selected a same frequency domain resource on a same slot, without implementing code division multiplexing, which will result in collision between multiple different signals, and then results in that the second node cannot decode the data in the frame structure signal correctly. In this case, the following process of the retransmission of the signal needs to be performed.

The process of a retransmission of the signal in a case where the transmission resource is an extending sequence is explained below in detail.

In the process of the retransmission of the signal, the second node performs the following contents.

**In** this embodiment, the second node transmits a retransmission indication to the first node. Retransmission indication information contains a retransmission instruction for the above-mentioned target data. After receiving the retransmission indication, the first node that does not transmit the target data successfully retransmits the target data in response to the indication.

Or, the retransmission indication contains indication information for the preamble sequence or the extending sequence, where the indication information indicates D preamble sequences or D extending sequences, and D is greater than or equal to 1. **In** the first node that does not transmit the target data successfully, if any preamble sequence of the D preamble sequences or any extending sequence of the D extending sequences were used in the last transmission of the target data, the target data is retransmitted.

In the process of the retransmission of the signal, the first node performs the following contents.

In an implementation, in this embodiment, the preamble sequence used by the first node to transmit the target data last time is the same as a preamble sequence in the above-mentioned retransmission indication, and then, a frame structure signal containing the target data is retransmitted; or, the extending sequence used by the first node to transmit the target data last time is the same as an extending sequence in the retransmission indication, and then, a frame structure signal containing the target data is retransmitted. Retransmitting the frame structure signal containing the target data, includes: determining a preamble sequence and a transmission resource, and transmitting the frame structure signal based on the determined preamble sequence and the determined transmission resource.

In another implementation, in this embodiment, the first node receives a retransmission indication, and in response to the indication, the first node determines an extending sequence from the set of extending sequences. For example, the first node randomly selects an extending sequence from the set of extending sequences. **In** addition, the first node uses the preamble sequence used for transmitting the target data last time as a preamble sequence for retransmitting the target data, or uses a first preamble sequence of the D preamble sequences in the retransmission indication as a preamble sequence used for retransmitting the target data. After the extending sequence and the preamble sequence are determined, the extending sequence is used to extend the target data, to obtain a frame structure signal for retransmitting, which is then transmitted to the second node.

It can be understood that in the process of the retransmission of the signal, the first node may reselect the extending sequence from the set of extending sequences. That is, in a case where multiple first nodes select an extending sequence from a same subset of extending sequences, resulting in the signal collision, they select extending sequences from the set of extending sequences (instead of the subset) when retransmitting, advantages of doing so is that: there may be more extending sequences to be selected when retransmitting, the range of selection for extending sequences is expanded, and the probability that multiple first nodes select a same extending sequence again is reduced greatly, that is, the probability of the signal collision is reduced, thereby improving the signal transmission efficiency.

In the process of the retransmission of the signal, the second node performs the following contents.

In this embodiment, the second node detects D preamble sequences or detects a first preamble sequence among the D preamble sequences, according to the retransmission indication indicating the D preamble sequences.

Furthermore, the second node utilizes an extending sequence in the set of extending sequences to de-extend the target data, in a case where the preamble sequence has been detected.

Embodiment 2

In this embodiment, it is taken as an example for the explanation that the transmission resource is a slot.

In the process of a new transmission of the signal, the first node performs the following contents.

In step 1, the first node determines a preamble sequence and a slot corresponding to the preamble sequence.

In this embodiment, the preamble sequence may be a predefined modulated signal or a predefined data sequence, e.g., an m-sequence with a length of 16. A set of preamble sequences contains P preamble sequences, where P is greater than or equal to 1.

A set of slots includes F slots and P subsets of slots, where F is a positive integer.

In this embodiment, the slot is a count value or corresponds to a time domain resource unit, and the set of slots or the subset of slots is a slot range. The first node can determine the slot range according to a transmission resource configuration parameter transmitted from the second node, or the slot range is a predefined slot range, for example, the slot range is from 0 to F-1, where F is greater than or equal to 1.

In a case where a value of F/P is an integer, in the P subsets of slots, a subset of slots with a serial number of f includes slots $f \cdot \dfrac{F}{P}$ to $(f+1) \cdot \dfrac{F}{P} - 1$, where $0 \leq f \leq P-1$.

In a case where a value of F/P is not an integer, the P subsets of slots include:

a subset of slots with a serial number of 0 including slots 0 to $\left\lfloor \dfrac{F}{P} \right\rfloor + \mathrm{mod}(F,P) - 1$ ; and a subset of slots with a serial number of f including slots

$$f \cdot \left\lfloor \frac{F}{P} \right\rfloor + \mathrm{mod}(F,P)$$

to

$$(f+1) \cdot \left\lfloor \frac{F}{P} \right\rfloor + \mathrm{mod}(F,P) - 1 \quad , \quad \text{where}$$

$1 \leq f \leq P-1$,

or,

a subset of slots with a serial number of f including slots $f \cdot \left\lfloor \dfrac{F}{P} \right\rfloor$ to $(f+1) \cdot \left\lfloor \dfrac{F}{P} \right\rfloor - 1$ , where $0 \leq f \leq P-2$; and a last subset of slots including slots $(P-1) \cdot \left\lfloor \dfrac{F}{P} \right\rfloor$ to F-1, where P is greater than or equal to 2.

In this embodiment, the first node determining the preamble sequence and the slot, includes one of the following two modes.

Mode 1: the first node determines a slot from the set of slots. Exemplarily, the first node randomly selects a slot from the set of slots.

Furthermore, the first node determines a subset of slots in which the slot is located, and then determines a corresponding preamble sequence according to the subset of slots, to obtain a frame structure signal.

Mode 2: the first node determines a preamble sequence from the set of preamble sequences, for example, the first node may determine a preamble sequence from the set of preamble sequences according to preamble sequence indication field information transmitted from the second node, and for example, the preamble sequence indication field information indicates a preamble sequence. Or, the first node randomly selects a preamble sequence from the set of preamble sequences.

Furthermore, the first node determines a subset of slots corresponding to the preamble sequence, and then determines a slot from the subset of slots. Exemplarily, the first node randomly selects a slot from the subset of slots.

It can be understood that in this embodiment, advantages of the method for determining the preamble sequence and the slot is that: since each preamble sequence corresponds to a subset of slots, the first communication node only needs to detect a corresponding preamble sequence in a slot range corresponding to a subset of slots when detecting the frame structure signal transmitted from the second communication node, without attempting to detect all preamble sequences, so that the complexity of signal detection by the first communication node may be reduced.

In step 2, the first node transmits a frame structure signal based on the slot and the preamble sequence.

In this embodiment, the first node transmits a frame structure signal containing the preamble sequence in the slot. A structural form of the frame structure signal may refer to the above description, which will not be repeated here.

In the process of a new transmission of the signal, the second node performs the following contents.

Since each preamble sequence corresponds to a subset of slots, the second node detects a preamble sequence corresponding to a subset of slots on the subset of slots when detecting the frame structure signal transmitted from the first node.

The process of determining the set of slots in a case where the transmission resource is a slot is explained below in detail.

In the process of determining the set of slots, the second node performs the following contents.

In this embodiment, the second node transmits a slot configuration parameter to the first node, so as to indicate the first node to determine the set of slots. The set of slots refers to a slot range. The slot configuration parameter indicates the number of slots in the slot range, or indicates a maximum slot value in the slot range.

In the process of determining the set of extending sequences, the first node performs the following contents.

In this embodiment, the first node determines the set of slots according to the slot configuration parameter. Exemplarily, the first node determines the number F of slots included in the set of slots according to the slot configuration parameter, and then may determine that the set of slots includes a slot 0 to a slot F-1. Or, the maximum slot value in the set of slots is determined as a slot F-1 according to the slot configuration parameter, and then, it is determined that the set of slots includes a slot 0 to a slot F-1.

The process of a retransmission of the signal in a case where the transmission resource is a slot is explained below in detail.

In the process of the retransmission of the signal, the second node performs the following contents.

In this embodiment, the second node transmits a retransmission indication to the first node. Retransmission indication information contains a retransmission instruction for the above-mentioned target data, to indicate the first node to retransmit a frame structure signal containing the target data. The first node that did not transmit the target data successfully, after receiving the retransmission indication, retransmits a frame structure signal containing the target data, in response to the indication.

Or, the retransmission indication contains indication information for the preamble sequence, where the indication information indicates D preamble sequences, and D is greater than or equal to 1. In a case where the target data is not transmitted successfully, the first node transmits a retransmission indication using any preamble sequence of the D preamble sequences, so as to indicate the first node to retransmit a frame structure signal containing the target data.

In the process of the retransmission of the signal, the first node performs the following contents.

In this embodiment, the first node receives the retransmission indication, and in response to the indication, the first node determines a slot from remaining slots of the set of slots, and for example, the first node randomly selects a slot from the remaining slots (i.e., the slot used for a retransmission is different from the slot used for the new transmission), and determines a subset of slots in which the slot is located. Then, according to the subset of slots, a corresponding preamble sequence is determined.

After the preamble sequence and the slot are determined, the frame structure signal is transmitted on the determined slot. The frame structure signal contains the data block and the re-determined preamble sequence, where the data block includes the target data.

In the process of the retransmission of the signal, the second node performs the following contents.

In this embodiment, the second node detects a preamble sequence corresponding to a subset of slots, on the subsets of slots.

It can be understood that in the process of the retransmission of the signal, a first node may reselect a slot from remaining slots in the set of slots. That is, in a case where multiple first nodes select a same slot in a same frequency domain resource, resulting in the signal collision, they select slots in the set of slots (instead of the subset) when retransmitting, advantages of doing so is that: there may be more slots to be selected when retransmitting, the range of selection for slots is extended, and the probability that multiple first nodes select a same slot again is reduced greatly, that is, the probability of the signal collision is reduced, thereby improving the signal transmission efficiency.

Embodiment 3

In this embodiment, it is taken as an example for the explanation that the transmission resource is a frequency domain resource.

In the process of a new transmission of the signal, the first node performs the following contents.

In step 1, the first node determines a preamble sequence and a frequency domain resource corresponding to the preamble sequence.

In this embodiment, the preamble sequence may be a predefined modulated signal or a predefined data sequence, e.g., an m-sequence with a length of 16. A set of preamble sequences contains P preamble sequences, where P is greater than or equal to 1.

In this embodiment, the frequency domain resource may be a transmission subband, a transmission channel, a physical resource block, or a subcarrier, etc. A set of frequency domain resources may contain H frequency domain resources, where H is a positive integer. The set of frequency domain resources includes P subsets of frequency domain resources, and P preamble sequences in a set of preamble sequences correspond to the P subsets of frequency domain resources, respectively.

The set of frequency domain resources is a predefined set, or the first node may determine the set of frequency domain resources according to a frequency domain resource configuration parameter transmitted from the second node.

In this embodiment, the first node determining the preamble sequence and the frequency domain resource, includes one of the following two modes.

Mode 1: the first node determines a frequency domain resource from the set of frequency domain resources. Exemplarily, the first node may determine a frequency domain resource according to frequency domain resource indication field information transmitted from the second node, and for example, the frequency domain resource indication field information indicates a frequency domain resource, or the first node randomly selects a frequency domain resource from the set of frequency domain resources.

Furthermore, the first node determines a subset of frequency domain resources in which the frequency domain resource is located, and then determines a corresponding preamble sequence according to the subset of frequency domain resources, to obtain a frame structure signal.

Mode 2: the first node determines a preamble sequence from the set of preamble sequences, for example, the first node may determine a preamble sequence from the set of preamble sequences according to preamble sequence indication field information transmitted from the second node, and for example, the preamble sequence indication field information indicates a preamble sequence. Or, the first node randomly selects a preamble sequence from the set of preamble sequences.

Furthermore, the first node determines a subset of frequency domain resources corresponding to the preamble sequence, and then determines a frequency domain resource from the subset of frequency domain resources. Exemplarily, the first node may determine a frequency domain resource from the subset of frequency domain resources according to the frequency domain resource indication field information transmitted from the second node, and for example, the frequency domain resource indication field information indicates a frequency domain resource. Or, the first node randomly selects a frequency domain resource from the subset of frequency domain resources.

It can be understood that in this embodiment, advantages of the method for determining the preamble sequence and the frequency domain resource is that: since each preamble sequence corresponds to a subset of frequency domain resources, the first communication node only needs to detect a corresponding preamble sequence in a subset of frequency domain resources when detecting the frame structure signal transmitted from the second communication node, without attempting to detect all preamble sequences, so that the complexity of signal detection by the second node (base station) may be reduced.

In step 2, the first node transmits a frame structure signal based on the frequency domain resource and the preamble sequence.

In this embodiment, the first node transmits a frame structure signal containing the preamble sequence in the frequency domain resource. A structural form of the frame structure signal may refer to the above description, which will not be repeated here.

In the process of a new transmission of the signal, the second node performs the following contents.

Since each preamble sequence corresponds to a subset of frequency domain resources, the second node detects a preamble sequence corresponding to a subset of frequency domain resources on the subset of frequency domain resources when detecting the frame structure signal transmitted from the first node.

The process of determining the set of frequency domain resources in a case where the transmission resource is a frequency domain resource is explained below in detail.

In the process of determining the set of frequency domain resources, the second node performs the following contents.

In this embodiment, the second node transmits a frequency domain resource configuration parameter to the first node, so as to indicate the first node to determine the set of frequency domain resources. The frequency domain resource configuration parameter indicates a certain frequency domain range, or indicates the number of frequency domain resources.

In the process of determining the set of extending sequences, the first node performs the following contents.

In this embodiment, the first node determines the set of frequency domain resources according to the frequency domain resource configuration parameter. Exemplarily, the first node determines a number J of frequency domain resources included in the set of frequency domain resources according to the frequency domain resource configuration parameter, and then determines the set of frequency domain resources according to the number J of frequency domain resources. Or, the first node determines a frequency domain resource range according to the frequency domain resource configuration parameter, and then divides the frequency domain resource range evenly to obtain the set of frequency domain resources.

The process of a retransmission of the signal in a case where the transmission resource is a slot is explained below in detail.

In the process of the retransmission of the signal, the second node performs the following contents.

In this embodiment, the second node transmits a retransmission indication to the first node. Retransmission indication information contains a retransmission instruction for the above-mentioned target data. The first node that did not transmit the target data successfully, after receiving the retransmission indication, retransmits a frame structure signal containing the target data, in response to the indication.

Or, the retransmission indication contains indication information for the preamble sequence, where the indication information indicates D preamble sequences, and D is greater than or equal to 1. In a case where the target data is not transmitted successfully, the first node transmits a retransmission indication using any preamble sequence of the D preamble sequences, so as to indicate the first node to retransmit a frame structure signal containing the target data.

In the process of the retransmission of the signal, the first node performs the following contents.

In this embodiment, the first node receives a retransmission indication, and in response to the indication, the first node determines a frequency domain resource from the set of frequency domain resources, and for example, the first node randomly selects a frequency domain resource from the set of frequency domain resources and determines a subset of frequency domain resources in which the frequency domain resource is located. Then, a corresponding preamble sequence is determined according to the subset of frequency domain resources.

After the preamble sequence and the frequency domain resource are determined, the frame structure signal is transmitted on the determined frequency domain resource, and the frame structure signal contains the data block and the re-determined preamble sequence, where the data block includes the target data.

In the process of the retransmission of the signal, the second node performs the following contents.

In this embodiment, the second node detects a preamble sequence corresponding to a subset of frequency domain resources, on the subset of frequency domain resources.

It can be understood that in the process of the retransmission of the signal, a first node may reselect a frequency domain resource from the set of frequency domain resources. That is, in a case where multiple first nodes select a same frequency domain resource in a same slot, resulting in signal collision, they select frequency domain resources in the set of frequency domain (instead of the subset) when retransmitting, advantages of doing so is that: there may be more frequency domain resources to be selected when retransmitting, the range of selection for frequency domain resources is extended, and the probability that multiple first nodes select a same frequency domain resource again is reduced greatly, that is, the probability of the signal collision is reduced, thereby improving the signal transmission efficiency.

It can be understood that in order to implement the above functions by a signal transmission apparatus (which may be the above terminal device), the signal transmission apparatus contains corresponding hardware structures and/or software modules for performing respective functions. Those skilled in the art should easily realize that, in combination with the algorithm steps of various examples described in the embodiments of the present disclosure, the present disclosure can be implemented in the form of hardware or a combination of hardware and computer software. Whether a certain function is performed in the form of hardware or computer software driving hardware, depends on the specific applications and restrictive conditions of designs of the technical solutions. Professional technicians may use different methods to implement the described functions for each specific application, but such an implementation should not be considered beyond the scope of the present disclosure.

In the embodiments of the present disclosure, the signal transmission apparatus may be divided into functional modules according to the above-mentioned method embodiments, and for example, may be divided in a way that each functional module corresponds to each function, or two or more functions may also be integrated into one functional module. The above integrated module may be implemented in the form of hardware, or may also be implemented in the form of software. It should be noted that the division of the modules in the embodiments of the present disclosure is schematic, which is only a logical functional division, and there may be other divisions for in actual implementations. An example in which each functional module is divided corresponding to each function is described as follows.

FIG. 9 is a structural schematic diagram of a signal transmission apparatus according to some embodiments, and the signal transmission apparatus may perform the signal transmission method provided in the above method embodiments. As shown in FIG. 9, the signal transmission apparatus includes: a determining module 901 and a transmitting module 902.

The determining module 901 is configured to determine a preamble sequence and a transmission resource.

The transmitting module 902 is configured to transmit a frame structure signal through the transmission resource, where the frame structure signal includes the preamble sequence and a data block, and the preamble sequence is located before the data block.

In some embodiments, the frame structure signal further includes an auxiliary sequence.

In some embodiments, the data block includes N pieces of data, where the N is an integer greater than 1; in the frame structure signal, there is an auxiliary sequence after every n pieces of the data and there is no auxiliary sequence at a tail of the data block, where n is an integer less than N.

In some embodiments, a number of auxiliary sequences in the data block is $\left\lceil \frac{N}{n} \right\rceil - 1$ .

In some embodiments, the preamble sequence is the same as the auxiliary sequence; or, the auxiliary sequence corresponds to a sequence in a preset set of sequences cyclically and sequentially in a time domain; or, the preamble sequence and the auxiliary sequence correspond to sequences in a preset set of sequences cyclically and sequentially in a time domain.

In some embodiments, a length of the auxiliary sequence is less than a length of the preamble sequence.

In some embodiments, in the frame structure signal, the preamble sequence is modulated by amplitude shift keying, and data in the data block is modulated by phase shift keying.

In some embodiments, the frame structure signal further includes a terminator; and the terminator is located after the data block.

In some embodiments, the frame structure signal further includes a delimiter, and the delimiter is located after the preamble sequence and before the data block; and the delimiter is a signal with a fixed form.

In some embodiments, the method is applied to a first node; the preamble sequence belongs to a set of preamble sequences, and the transmission resource belongs to a set of transmission resources; each preamble sequence in the set of preamble sequences is in one-to-one correspondence with each subset of transmission resources in the set of transmission resources.

In some embodiments, the set of transmission resources is determined according to a transmission resource configuration parameter transmitted by a second node.

In some embodiments, determining the preamble sequence and the transmission resource further includes: determining the preamble sequence from the set of preamble sequences, and determining a subset of transmission resources corresponding to the preamble sequence from the set of transmission resources and determining the transmission resource from the subset of transmission resources; or, determining the transmission resource from the set of transmission resources, and determining a subset of transmission resources to which the transmission resource belongs, and then determining the preamble sequence corresponding to the subset of transmission resources from the set of preamble sequences.

In some embodiments, the transmission resource includes at least one of: an extending sequence, a time domain resource, or a frequency domain resource.

In some embodiments, in a case where the transmission resource is the extending sequence, data in the data block is data that has been extended by the extending sequence.

In some embodiments, the time domain resource is a slot; a set of slots includes F slots and P subsets of slots, where F and P are positive integers; in a case where a value of F/P is an integer, a subset of slots with a serial number f in the P subsets of slots includes

slots $f \cdot \dfrac{F}{P}$ to $(f+1) \cdot \dfrac{F}{P} - 1$, where 0≤f≤P-1.

In some embodiments, the time domain resource is a slot; a set of slots includes F slots and P subsets of slots, where F and P are positive integers; in a case where a value of F/P is not an integer, the P subsets of slots include: a subset of slots with a serial number 0 including slots 0 to $\left\lfloor \dfrac{F}{P} \right\rfloor + \mathrm{mod}(F,P) - 1$, and a subset of slots with a serial number f including slots

$$f \cdot \left\lfloor \dfrac{F}{P} \right\rfloor + \mathrm{mod}(F,P) \qquad \text{to}$$

$$(f+1) \cdot \left\lfloor \dfrac{F}{P} \right\rfloor + \mathrm{mod}(F,P) - 1, \text{ where } 1 \le f \le P-1;$$

or, a subset of slots with a serial number f including slots

$$f \cdot \left\lfloor \dfrac{F}{P} \right\rfloor \text{ to } (f+1) \cdot \left\lfloor \dfrac{F}{P} \right\rfloor - 1, \text{ where } 0 \le f \le P-2, \text{ and a}$$

last subset of slots including slots $(P-1) \cdot \left\lfloor \dfrac{F}{P} \right\rfloor$ to F-1.

In some embodiments, the above-mentioned signal transmission apparatus further includes a receiving module 903. The receiving module 903 is configured to receive a retransmission indication, where the retransmission indication includes indication information for the preamble sequence; and the indication information is used to indicate D preamble sequences, and D is a positive integer. The determining module 901 is configured to: determine an extending sequence from a set of extending sequences; and use a preamble sequence used for transmitting the data block last time as a preamble sequence used for retransmitting the data block; or, use a first preamble sequence of the D preamble sequences as a preamble sequence used for retransmitting the data block.

FIG. 10 is a structural schematic diagram of another signal transmission apparatus according to some embodiments, and the signal transmission apparatus may perform the signal transmission method provided in the above method embodiments. As shown in FIG. 10, the signal transmission apparatus includes: a detecting module 1001 and an acquiring module 1002.

The detecting module 1001 is configured to detect a preamble sequence.

The acquiring module 1002 is configured to acquire a data frame structure signal of a data block in a frame structure signal based on a transmission resource in a case where the preamble sequence in the frame structure signal has been detected.

In some embodiments, the method is applied to a second node, the preamble sequence belongs to a set of preamble sequences, the transmission resource belongs to a set of transmission resources; and each preamble sequence in the set of preamble sequences is in one-to-one correspondence with each subset of transmission resources in the set of transmission resources.

In some embodiments, the above-mentioned signal transmission apparatus further includes a transmitting module 1003. The transmitting module 1003 is configured to transmit a transmission resource configuration parameter to a first node; where the transmission resource configuration parameter is used to indicate the first node to determine the set of transmission resources.

In some embodiments, the transmission resource includes at least one of: an extending sequence, a time domain resource, or a frequency domain resource.

In some embodiments, in a case where the transmission resource is an extending sequence, the detecting module 1001 is configured to detect each preamble sequence in the set of preamble sequences; the acquiring module 1002 is configured to determine a subset of extending sequences corresponding to the preamble sequence that has been detected, and de-extend the data in the data block based on the subset of extending sequences.

In some embodiments, the detecting module 1001 is configured to detect the preamble sequence corresponding to a subset of time domain resources on the subset of time domain resources, in a case where the transmission resource is a time domain resource.

In some embodiments, the time domain resource is a slot; a set of slots includes F slots and P subsets of slots, where F and P are positive integers; in a case where a value of F/P is an integer, a subset of slots with a serial number f in the P subsets of slots includes

slots $f \cdot \dfrac{F}{P}$ to $(f+1) \cdot \dfrac{F}{P} - 1$, where $0 \leq f \leq P-1$.

In some embodiments, the time domain resource is a slot; a set of slots includes F slots and P subsets of slots, where F and P are positive integers; in a case where a value of F/P is not an integer, the P subsets of slots include: a subset of slots with a serial number 0 including slots 0 to $\left\lfloor \dfrac{F}{P} \right\rfloor + \mathrm{mod}(F,P) - 1$, and a subset of slots with a serial number f including slots

$$f \cdot \left\lfloor \dfrac{F}{P} \right\rfloor + \mathrm{mod}(F,P) \quad \text{to}$$

$$(f+1) \cdot \left\lfloor \dfrac{F}{P} \right\rfloor + \mathrm{mod}(F,P) - 1, \text{ where } 1 \leq f \leq P-1;$$

or, a subset of slots with a serial number f including slots

$f \cdot \left\lfloor \dfrac{F}{P} \right\rfloor$ to $(f+1) \cdot \left\lfloor \dfrac{F}{P} \right\rfloor - 1$, where $0 \leq f \leq P-2$, and a last subset of slots including slots $(P-1) \cdot \left\lfloor \dfrac{F}{P} \right\rfloor$ to F-1.

In some embodiments, in a case where the transmission resource is a frequency domain resource, the detecting module 1001 is configured to detect the preamble sequence corresponding to a subset of frequency domain resources, on the subset of frequency domain resources.

In some embodiments, the transmitting module 1003 is further configured to transmit a retransmission indication, where the retransmission indication includes indication information for the preamble sequence, the indication information is used to indicate D preamble sequences, and D is a positive integer.

In some embodiments, the detecting module 1001 is further configured to detect the D preamble sequences, or detect a first preamble sequence of the D preamble sequences, in a case where the transmission resource is an extending sequence.

In some embodiments, the above-mentioned signal transmission apparatus further includes a processing module 1004. The processing module 1004 is configured to de-expand the data in the data block based on a set of extending sequences in a case where the preamble sequence has been detected.

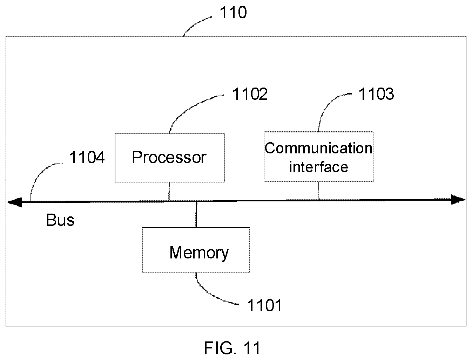

In a case of implementing the functions of the integrated modules mentioned above in the form of hardware, the embodiments of the present disclosure provide another possible structure of a communication apparatus involved in the above embodiments. As shown in FIG. 11, the communication apparatus 110 includes: a processor 1102 and a bus 1104. In some embodiments, the communication apparatus may further include a memory 1101; and in some embodiments, the communication apparatus may further include a communication interface 1103.

The processor 1102 may implement or perform various exemplary logical blocks, modules and circuits described in conjunction with the embodiments of the present disclosure. The processor 1102 may be a central processing unit, a general-purpose processor, a digital signal processor, an application specific integrated circuit, a field programmable gate array or other programmable logic devices, a transistor logic device, a hardware component or any combination thereof. The processor 1102 may implement or perform various exemplary logical blocks, modules and circuits described in conjunction with the embodiments of the present disclosure. The processor 1102 may also be a combination that implements computing functions, for example, including a combination of one or more microprocessors, a combination of a digital signal processor (DSP) and a microprocessor, or the like.

The communication interface 1103 is configured to connect with other devices via a communication network. The communication network may be an Ethernet, a radio access network, a wireless local area network (WLAN), or the like.

The memory 1101 may be, but be not limited to, a read-only memory (ROM) or other types of static storage devices capable of storing static information and instructions, a random access memory (RAM) or other types of dynamic storage devices capable of storing information and instructions, or may also be an electrically erasable programmable read-only memory (EEPROM), a magnetic disk storage medium or other magnetic storage devices, or any other medium capable of being used to carry or store the desired program codes in the form of instructions or data structures and capable of being accessed by a computer.

As an implementation, the memory 1101 may exist independently of the processor 1102, and the memory 1101 may be connected to the processor 1102 via the bus 1104 and is used for storing instructions or program codes. The processor 1102, when calling and executing the instructions or program codes stored in the memory 1101, is capable of implementing the data transmission method provided in the embodiments of the present disclosure.

In another implementation, the memory 1101 may also be integrated with the processor 1102.

The bus 1104 may be an extended industry standard architecture (EISA) bus or the like. Buses 1104 may be divided into address buses, data buses, control buses, and the like. For the convenience of representation, only one thick line is used in FIG. 11 for representation, but it does not mean that there is only one bus or one type of bus.

Some embodiments of the present disclosure provide a computer-readable storage medium (e.g., a non-transitory computer-readable storage medium), and the computer-readable storage medium has stored computer program instructions therein that, when running on a computer, cause the computer to perform the data transmission method as described in any of the above-mentioned embodiments.

Exemplarily, the above-mentioned computer-readable storage medium may include, but be not limited to, a magnetic storage device (e.g., a hard disk, a floppy disk or a magnetic tape, etc.), an optical disk (e.g., a Compact Disk (CD) or a Digital Versatile Disk (DVD), etc.), a smart card and a flash memory device (e.g., an Erasable Programmable Read-Only Memory (EPROM), a card, a stick or a key driver, etc.). The various computer-readable storage media described in the present disclosure may represent one or more devices and/or other machine-readable storage media for storing information. The term "machine-readable storage medium" may include, but be not limited to, a radio channel and various other media capable of storing, containing, and/or carrying instructions and/or data.

The embodiments of the present disclosure provide a computer program product including instructions, and the computer program product, when running on a computer, causes the computer to perform the signal transmission method described in any embodiment of the above embodiments.

The above is only the specific implementations of the present disclosure, but the protection scope of the present disclosure is not limited thereto, and any changes or substitutions within the scope of the technologies disclosed in the present disclosure should be covered within the protection scope of the present disclosure. Therefore, the protection scope of the present disclosure should be based on the protection scope of claims.

**Claims**

1. A signal transmission method, **characterized in that** the method is applied to a first node and comprises:

determining a preamble sequence and a transmission resource; and
transmitting a frame structure signal through the transmission resource, wherein the frame structure signal comprises the preamble sequence and a data block, and the preamble sequence is located before the data block.

2. The method according to claim 1, wherein the frame structure signal further comprises an auxiliary sequence.

3. The method according to claim 2, wherein the data block comprises N pieces of data, wherein the N is an integer greater than 1; in the frame structure signal, there is an auxiliary sequence after every n pieces of the data and there is no auxiliary sequence at a tail of the data block, wherein n is an integer less than N.

4. The method according to claim 3, wherein a number of auxiliary sequences in the data block is $\left\lceil \frac{N}{n} \right\rceil - 1$ .

5. The method according to claim 3 or 4, wherein the preamble sequence is the same as the auxiliary sequence; or, the auxiliary sequence corresponds to a sequence in a preset set of sequences cyclically and sequentially in a time domain; or, the preamble sequence and the auxiliary sequence correspond to sequences in a preset set of sequences cyclically and sequentially in a time domain.

6. The method according to any one of claims 2 to 4, wherein a length of the auxiliary sequence is less than a length of the preamble sequence.

7. The method according to claim 1, wherein in the frame structure signal, the preamble sequence is modulated by amplitude shift keying, and data in the data block is modulated by phase shift keying.

8. The method according to any one of claims 1 to 4, wherein the frame structure signal further comprises a terminator; and the terminator is located after the data block.

9. The method according to claim 1, wherein the frame structure signal further comprises a delimiter, and the delimiter is located after the preamble sequence and before the data block; and
the delimiter is a signal with a fixed form.

10. The method according to claim 1, wherein the preamble sequence belongs to a set of preamble sequences, and the transmission resource belongs to a set of transmission resources; each preamble sequence in the set of preamble sequences is in one-to-one correspondence with each subset of transmission resources in the set of transmission resources.

11. The method according to claim 10, wherein the set of transmission resources is determined according to a transmission resource configuration parameter transmitted by a second node.

12. The method according to claim 10, wherein determining the preamble sequence and the transmission resource comprises:

determining the preamble sequence from the set of preamble sequences, and determining a subset of transmission resources corresponding to the preamble sequence from the set of transmission resources and determining the transmission resource from the subset of transmission resources;
or,
determining the transmission resource from the set of transmission resources, and determining a subset of transmission resources to which the transmission resource belongs, and then determining the preamble sequence corresponding to the subset of transmission resources from the set of preamble sequences.

13. The method according to claim 10, wherein the transmission resource comprises at least one of: an extending sequence, a time domain resource, or a frequency domain resource.

14. The method according to claim 13, wherein in a case where the transmission resource is the extending sequence, data in the data block is data that has been extended by the extending sequence.

15. The method according to claim 13, wherein the time domain resource is a slot; a set of slots comprises F slots and P subsets of slots, wherein F and P are positive integers;
in a case where a value of F/P is an integer, a subset of slots with a serial number f in the P subsets of slots comprises slots $f \cdot \frac{F}{P}$ to $(f+1) \cdot \frac{F}{P} - 1$, wherein $0 \leq f \leq P-1$.

16. The method according to claim 13, wherein the time domain resource is a slot; a set of slots comprises F slots and P subsets of slots, wherein F and P are positive integers;
in a case where a value of F/P is not an integer, the P subsets of slots comprise:

a subset of slots with a serial number 0 comprising slots 0 to $\left\lfloor \frac{F}{P} \right\rfloor + \mathrm{mod}(F, P) - 1$, and a subset of slots with a serial number f comprising slots $f \cdot \left\lfloor \frac{F}{P} \right\rfloor + \mathrm{mod}(F, P)$ to $(f+1) \cdot \left\lfloor \frac{F}{P} \right\rfloor + \mathrm{mod}(F, P) - 1$, wherein $1 \leq f \leq P-1$;
or,
a subset of slots with a serial number f comprising slots $f \cdot \left\lfloor \frac{F}{P} \right\rfloor$ to $(f+1) \cdot \left\lfloor \frac{F}{P} \right\rfloor - 1$, wherein $0 \leq f \leq P-2$, and a last subset of slots comprising slots $(P-1) \cdot \left\lfloor \frac{F}{P} \right\rfloor$ to F-1.

17. The method according to claim 1, further comprising:

receiving a retransmission indication, wherein the retransmission indication comprises indication information for the preamble sequence; and the indication information is used to indicate D preamble sequences, and D is a positive integer;
in a case where the transmission resource is an extending sequence, determining the preamble sequence and the transmission resource comprises:

determining an extending sequence from a set of extending sequences;
using a preamble sequence used for transmitting the data block last time as a preamble sequence used for retransmitting the data block; or, using a first preamble sequence of the D preamble sequences as a preamble sequence used for retransmitting the data block.

18. A signal transmission method, **characterized in that** the method is applied to a second node and comprises:

detecting a preamble sequence; and
acquiring data of a data block in a frame structure signal based on a transmission resource in a case where the preamble sequence in the frame structure signal has been detected.

19. The method according to claim 18, wherein the preamble sequence belongs to a set of preamble sequences, the transmission resource belongs to a set of transmission resources; and each preamble sequence in the set of preamble sequences is in one-to-one correspondence with each subset of transmission resources in the set of transmission resources.

20. The method according to claim 19, further comprising:
transmitting a transmission resource configuration parameter to a first node; wherein the transmission resource configuration parameter is used to indicate the first node to determine the set of transmission resources.

21. The method according to claim 19, wherein the transmission resource comprises at least one of: an extending sequence, a time domain resource, or a frequency domain resource.

22. The method according to claim 19, wherein in a case where the transmission resource is an extending sequence, detecting the preamble sequence comprises:

detecting each preamble sequence in the set of preamble sequences, and
acquiring the data of the data block in the frame structure signal based on the transmission resource comprises:

determining a subset of extending sequences corresponding to the preamble sequence that has been detected; and
de-extending the data in the data block based on the subset of extending sequences.

23. The method according to claim 19, wherein in a case where the transmission resource is a time domain resource, detecting the preamble sequence comprises:
detecting the preamble sequence corresponding to a subset of time domain resources, in the subset of time domain resources.

24. The method according to claim 23, wherein the time domain resource is a slot; a set of slots comprises F slots and P subsets of slots, wherein F and P are positive integers;
in a case where a value of F/P is an integer, a subset of slots with a serial number f in the P subsets of slots comprises slots $f \cdot \frac{F}{P}$ to $(f+1) \cdot \frac{F}{P} - 1$, wherein $0 \leq f \leq P-1$.

25. The method according to claim 23, wherein the time domain resource is a slot; a set of slots comprises F slots and P subsets of slots, wherein F and P are positive integers;
in a case where a value of F/P is not an integer, the P subsets of slots comprise:

a subset of slots with a serial number 0 comprising slots 0 to $\left\lfloor \frac{F}{P} \right\rfloor + \mathrm{mod}\,(F, P) - 1$, and a subset of slots with a serial number f comprising slots

$$f \cdot \left\lfloor \frac{F}{P} \right\rfloor + \mathrm{mod}(F,P) \qquad \text{to}$$

$$(f+1) \cdot \left\lfloor \frac{F}{P} \right\rfloor + \mathrm{mod}(F,P) - 1 \, , \quad \text{wherein}$$

$1 \leq f \leq P-1$;
or,
a subset of slots with a serial number f comprising slots $f \cdot \left\lfloor \frac{F}{P} \right\rfloor$ to $(f+1) \cdot \left\lfloor \frac{F}{P} \right\rfloor - 1$, wherein $0 \leq f \leq P-2$, and a last subset of slots comprising slots $(P-1) \cdot \left\lfloor \frac{F}{P} \right\rfloor$ to F-1.

26. The method according to claim 19, wherein in a case where the transmission resource is a frequency domain resource, detecting the preamble sequence comprises:
detecting the preamble sequence corresponding to a subset of frequency domain resources, on the subset of frequency domain resources.

27. The method according to claim 22, further comprising:
transmitting a retransmission indication, wherein the retransmission indication comprises indication information for the preamble sequence, the indication information is used to indicate D preamble sequences, and D is a positive integer.

28. The method according to claim 27, wherein after transmitting the retransmission indication, the method further comprises:
detecting the D preamble sequences, or detecting a first preamble sequence of the D preamble sequences, in a case where the transmission resource is an extending sequence.

29. The method according to claim 28, further comprising:
de-extending the data in the data block based on the set of extending sequences in a case where the preamble sequence has been detected.

30. A communication apparatus, **characterized by** comprising: a processor and a memory configured to store instructions executable by the processor;
wherein the processor is configured to execute the instructions to cause the communication apparatus to perform the signal transmission method according to any one of claims 1 to 29.

31. A computer-readable storage medium, wherein the computer-readable storage medium has stored computer instructions, and the computer instructions, when executed on a communication apparatus, cause the communication apparatus to perform the signal transmission method according to any one

**EP 4 642 090 A1**

of claims 1 to 29.

Base station      Terminal device

FIG. 1

| A first node determines a preamble sequence and a transmission resource | S201 |

| The first node sends a frame structure signal by means of the transmission resource | S202 |

FIG. 2

| Preamble sequence | Data block |

FIG. 3

| Preamble sequence | n pieces of data | Auxiliary sequence | n pieces of data | Auxiliary sequence | . . . | n pieces of data | Auxiliary sequence | m pieces of data |

FIG. 4

| Preamble sequence | n pieces of data | Auxiliary sequence | n pieces of data | Auxiliary sequence | . . . | n pieces of data | Auxiliary sequence | m pieces of data | terminator |

FIG. 5

| A first node determines a sequence and a transmission resource | S201 |

| The first node transmits a frame structure signal through the transmission resource | S202 |

| The first node receives a retransmission indication | S203 |

| The first node retransmits the signal in response to the retransmission indication | S204 |

FIG. 6

| A second node detects a preamble sequence | S701 |

| Acquire data of a data block in a frame structure signal based on a transmission resource in a case where the preamble sequence in the frame structure signal has been detected | S702 |

FIG. 7

| | |
|---|---|
| A second node detects a preamble sequence | S701 |

↓

| | |
|---|---|
| Acquire data of a data block in a frame structure signal based on a transmission resource in a case where the preamble sequence in the frame structure signal has been detected | S702 |

↓

| | |
|---|---|
| The second node transmits a retransmission indication | S703 |

↓

| | |
|---|---|
| The second node re-detects a preamble sequence | S704 |

↓

| | |
|---|---|
| The second node acquires retransmitted data | S705 |

FIG. 8

Signal transmission apparatus

Determining module 901

Transmitting module 902

Receiving module 903

FIG. 9

Signal transmission apparatus

Detecting module 1001

Acquiring module 1002

Transmitting module 1003

Processing module 1004

FIG. 10

FIG. 11

## INTERNATIONAL SEARCH REPORT

| International application No. |
| --- |
| **PCT/CN2024/088018** |

**A. CLASSIFICATION OF SUBJECT MATTER**

H04W 28/06(2009.01)i

According to International Patent Classification (IPC) or to both national classification and IPC

**B. FIELDS SEARCHED**

Minimum documentation searched (classification system followed by classification symbols)

IPC: H04W H04L H04Q

Documentation searched other than minimum documentation to the extent that such documents are included in the fields searched

Electronic data base consulted during the international search (name of data base and, where practicable, search terms used)

CNTXT; WPABS; WPABSC; ENTXT; ENTXTC; CJFD; IEEE; 3GPP; CNKI: 随机接入, 前导, 数据块, 辅助, 同步, 帧, 时隙, 扩展, 集合, 子集, random access, RA, PRACH, preamble, data block, DB, auxiliary, synchronization, frame, slot, extension, set, subset

**C. DOCUMENTS CONSIDERED TO BE RELEVANT**

| Category* | Citation of document, with indication, where appropriate, of the relevant passages | Relevant to claim No. |
| --- | --- | --- |
| X | CN 107889273 A (BEIJING SAMSUNG TELECOM R&D CENTER; SAMSUNG ELECTRONICS CO., LTD.) 06 April 2018 (2018-04-06) description, paragraphs [0002]-[0196] | 1-2, 6-31 |
| A | CN 110519008 A (STATE GRID JIANGSU ELECTRIC POWER COMPANY RESEARCH INSTITUTE; STATE GRID CORPORATION OF CHINA; STATE GRID JIANGSU ELECTRIC POWER CO., LTD.; JIANGSU ELECTRIC POWER RESEARCH INSTITUTE CO., LTD.; NANJING INRICH TECHNOLOGY CO., LTD.) 29 November 2019 (2019-11-29) entire document | 1-31 |
| A | CN 111294937 A (BEIJING SPREADTRUM HIGH-TECH COMMUNICATIONS TECHNOLOGY CO., LTD.) 16 June 2020 (2020-06-16) entire document | 1-31 |
| A | EP 2731306 A2 (THALES S.A.) 14 May 2014 (2014-05-14) entire document | 1-31 |

☐ Further documents are listed in the continuation of Box C.    ☑ See patent family annex.

| | |
| --- | --- |
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **12 July 2024** | **18 July 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/088018**

| Patent document cited in search report | | | Publication date (day/month/year) | Patent family member(s) | | | Publication date (day/month/year) |
|---|---|---|---|---|---|---|---|
| CN | 107889273 | A | 06 April 2018 | WO | 2018062925 | A1 | 05 April 2018 |
| | | | | US | 2020029366 | A1 | 23 January 2020 |
| | | | | US | 11206689 | B2 | 21 December 2021 |
| | | | | KR | 20190050838 | A | 13 May 2019 |
| | | | | KR | 102450944 | B1 | 05 October 2022 |
| CN | 110519008 | A | 29 November 2019 | None | | | |
| CN | 111294937 | A | 16 June 2020 | KR | 20210126609 | A | 20 October 2021 |
| | | | | JP | 2022524706 | A | 10 May 2022 |
| | | | | JP | 7238144 | B2 | 13 March 2023 |
| | | | | WO | 2020147577 | A1 | 23 July 2020 |
| | | | | US | 2022104267 | A1 | 31 March 2022 |
| EP | 2731306 | A2 | 14 May 2014 | PL | 2731306 | T3 | 28 February 2020 |
| | | | | EP | 2731306 | A3 | 28 May 2014 |
| | | | | EP | 2731306 | B1 | 18 September 2019 |
| | | | | IL | 229301 | A | 28 September 2017 |
| | | | | SG | 2013083662 | A | 27 June 2014 |
| | | | | FR | 2998120 | A1 | 16 May 2014 |
| | | | | FR | 2998120 | B1 | 21 November 2014 |
| | | | | ES | 2762199 | T3 | 22 May 2020 |
| | | | | ZA | 201308408 | B | 30 July 2014 |
| | | | | US | 2014133588 | A1 | 15 May 2014 |
| | | | | US | 9258162 | B2 | 09 February 2016 |

Form PCT/ISA/210 (patent family annex) (July 2022)

**REFERENCES CITED IN THE DESCRIPTION**

**Patent documents cited in the description**

- CN 202310615610